# EUROPÄISCHE PATENTANMELDUNG

(11) **EP 3 825 285 A1**
(43) Veröffentlichungstag der Anmeldung: **26.05.2021**
(21) Anmeldenummer: 19210924.7
(22) Anmeldetag: 22.11.2019
(51) Int. Cl.: C02F 1/44, A47L 15/42, B01D 61/02, B01D 61/12, C02F 1/28

(54) **VERFAHREN ZUR REINIGUNG VON GESCHIRR IN EINEM GESCHIRRSPÜLER MIT EINER UMKEHROSMOSEVORRICHTUNG**

(71) Anmelder: V-Zug AG, 6300 Zug (CH)
(72) Erfinder: Bon, Patrick, 8810 Horgen (CH); Keller, Hannes Samuel, 6102 Malters (CH); Gau, Ingo, 6317 Oberwil (CH); Auerswald, Janko, 6004 Luzern (CH)
(74) Vertreter: Hochreutener, Joel Marc

(57) **Zusammenfassung**

Ein Geschirrspüler umfasst einen Bottich (1) zur Aufnahme von Geschirr und eine Umkehrosmosevorrichtung (3) zur Bereitstellung von Reinwasser und Konzentrat. Im dazugehörigen Geschirrspülverfahren wird ein Vor- und ein Zwischenspülen durchgeführt, mittels der Umkehrosmosevorrichtung (3) Reinwasser und Konzentrat bereitgestellt und das Geschirr mittels des Reinwassers zwischen- und klargespült.

## Beschreibung

### Gebiet der Erfindung

Die Erfindung betrifft ein Verfahren zur Reinigung von Geschirr in einem Geschirrspüler, insbesondere einem Haushaltsgeschirrspüler, und einen Geschirrspüler zur Durchführung eines solchen Verfahrens. Der Geschirrspüler umfasst einen Bottich zur Aufnahme des Geschirrs und eine Umkehrosmosevorrichtung zur Bereitstellung von Reinwasser.

### Hintergrund

Ein Geschirrspüler reinigt das Geschirr in einem oder in mehreren Wasch- und Klarspülgängen. Zum Schluss des Reinigungsprozesses trocknet der Geschirrspüler das Geschirr. Damit das Geschirr gut trocknet und möglichst keine Trocknungsflecken entstehen, wird Klarspülmittel eingesetzt, welches die Oberflächenspannung des Wassers reduziert und dadurch eine Tropfenbildung möglichst vermieden wird.

Insbesondere auf Kunststoffbehältnissen (Tupperware), aber auch an Glasrändern, die in Kontakt mit dem Geschirrkorb sind, kann das Wasser nur schlecht trocknen und ablaufen, weil die Wärmekapazität, die Wärmeleitung und die Oberflächenenergie von Kunststoff gering ist. Das nicht ablaufende Wasser in Form von haftenden Tropfen auf der Oberfläche oder als Restpfützen in schöpfenden Konturen kann nach dem Trocknen deutlich sichtbare Kalk- und Salzflecken hinterlassen.

### Darstellung der Erfindung

Es ist Aufgabe der Erfindung, ein Verfahren zur Reinigung von Geschirr in einem Geschirrspüler bereitzustellen mit welchem Trocknungsflecken reduziert werden können.

Diese Aufgabe wird vom Verfahren gemäss dem unabhängigen Verfahrensanspruch gelöst. Das Verfahren dient der Reinigung von Geschirr in einem Geschirrspüler, insbesondere in einem Haushaltsgeschirrspüler. Der Geschirrspüler umfasst einen Bottich zur Aufnahme des Geschirrs und eine Umkehrosmosevorrichtung zur Bereitstellung von Reinwasser und Konzentrat.

Mittels der Umkehrosmosevorrichtung wird die Fremdstoffkonzentration im Frischwasser, d.h. zum Beispiel gelöste Salzionen, reduziert um reineres Wasser zu erhalten. Dieser physikalische Prozess ist bekannt. Unter Frischwasser ist das dem Geschirrspüler zugeführte Wasser zu verstehen, beispielsweise Leitungswasser eines Privathaushaltes. Unter dem Begriff "Reinwasser" wird das aus der Umkehrosmosevorrichtung ausgegebene, eine im Vergleich zum zugeführten Frischwasser niedrigere Fremdstoffkonzentration aufweisende Wasser verstanden. Der Reinheitsgrad bzw. die Konzentration des Fremdstoffes kann unterschiedlich sein und hängt u.a. von dem in der Umkehrosmosevorrichtung angewendeten Druck ab. Das Konzentrat ist das von der Umkehrosmosevorrichtung abgegebene, eine im Vergleich zum Frischwasser höhere Fremdstoffkonzentration aufweisende Wasser.

Im Weiteren umfasst das Verfahren die folgenden Verfahrensschritte:
- Durchführen eines Vor- und/oder Hauptwaschens;
- Bereitstellen von Reinwasser und Konzentrat mittels der Umkehrosmosevorrichtung;
- Zwischenspülen und/oder Klarspülen des Geschirrs mittels des Reinwassers.

Vor- und Hauptwaschen dienen der Entfernung des Schmutzes vom Geschirr. Das häufig angewendete Zwischenspülen dient der Entfernung eventuell verbliebener Verunreinigungen. Das Klarspülen dient zur Entfernung des verunreinigten Waschwassers vom Geschirr sowie zur Verhinderung von Kalk- und Wasserflecken. Er bereitet den Trocknungsvorgang vor.

Die zeitliche Abfolge der Verfahrensschritte ist nicht definiert. Das Reinwasser kann beispielsweise vor dem Vor- und/oder Hauptwaschen, während dem Vor- und/oder Hauptwaschen, zwischen dem Hauptwaschen und dem Zwischenspülen oder während des Zwischen- und/oder Klarspülens bereitgestellt werden.

Die Bereitstellung von Reinwasser mittels einer Umkehrosmosevorrichtung hat zum Vorteil, dass das beim Zwischen- und/oder Klarspülen verwendete Wasser eine verhältnismässig geringe Fremdstoffkonzentration aufweist und entsprechend Trocknungsflecken am Geschirr reduziert werden können.

Insbesondere umfasst der Geschirrspüler einen ersten Speichertank. Der Speichertank kann ein beliebiges Volumen aufweisen und beispielsweise in unterschiedliche Kompartimente aufgeteilt sein, welche direkt nebeneinander oder an verschiedenen Orten innerhalb oder ausserhalb des Geschirrspülers angeordnet sind.

Der erste Speichertank kann für die Speicherung von Wasser jeglicher Art, beispielsweise von Frischwasser, Reinwasser, Konzentrat oder aus dem Bottich stammendes gebrauchtes Wasser vorgesehen sein. Er kann der zeitlichen oder energietechnischen Optimierung des Geschirrspülprozesses dienen.

In einer besonderen Ausführungsform umfasst das Verfahren die folgenden Verfahrensschritte:
- Bereitstellen des Reinwassers mittels der Umkehrosmosevorrichtung vor und/oder während des Vor- und/oder Hauptwaschens und Speichern des Reinwassers im ersten Speichertank;
- Zuführen des Reinwassers aus dem ersten Speichertank in den Bottich während des Zwischen- und/oder des Klarspülens.

Insbesondere kann auch während des Zwischen- und/oder des Klarspülens Reinwasser mittels der Umkehrosmosevorrichtung bereitgestellt werden.

Dieses Verfahren hat den Vorteil, dass die Bereitstellung des Reinwassers bereits während des Vor- und/oder Hauptwaschens durchgeführt werden kann. Das Reinwasser steht während des Zwischen- und/oder Klarspülens sofort zur Verfügung und braucht lediglich aus dem Speichertank dem Bottich zugeführt zu werden.

Insbesondere weist der erste Speichertank ein Speichervolumen auf, welches mindestens dem benötigten Volumen des Reinwassers während des Zwischen- und/oder Klarspülens entspricht. Dadurch ist gewährleistet, dass das Reinwasser während des gesamten Zwischen- und/oder Klarspülens sofort zur Verfügung steht. Das Verfahren ist damit zeitlich optimiert.

Im Weiteren kann das Verfahren den folgenden Verfahrensschritt umfassen:
- Zuführen des Konzentrates in den Bottich unmittelbar während der Bereitstellung mittels der Umkehrosmosevorichtung, und
- insbesondere Zuführen von Frischwasser in den Bottich während des Vor- und/oder Hauptwaschens.

Das Vorsehen dieser Verfahrensschritte hat eine energietechnische Optimierung zur Absicht. Das beim Umkehrosmoseprozess entstehende Konzentrat soll nicht einfach in den Abfluss verworfen, sondern während des Vor- und/oder Hauptwaschens im Bottich verwendet werden. Das Konzentrat kann während des Vor- und/oder Hauptwaschens sofort in den Bottich eingelassen werden, sodass sich die Wassermenge innerhalb des Bottichs kontinuierlich erhöht. In den Bottich kann zusätzlich auch Frischwasser eingeleitet werden, sofern der Wasserbedarf während des Vor- und/oder Hauptwaschens grösser ist, als von der Umkehrosmosevorrichtung Konzentrat bereitgestellt wird. Im Weiteren kann auch zu Beginn des Vor- und/oder Hauptwaschens eine gewisse Menge Frischwasser in den Bottich eingelassen werden, sodass Vor- und/oder Hauptwaschens möglichst rasch gestartet werden kann.

In einer besonderen Ausführungsform umfasst der Geschirrspüler einen zweiten Speichertank. Es ist vorgesehen, dass das während des Zwischen- und/oder Klarspülens im Bottich gebrauchte Reinwasser während und/oder am Ende des Klarspülens vom Bottich in den zweiten Speichertank zugeführt wird und in einem nächsten Waschgang wiederverwendet wird.

Dieser Verfahrensschritt dient ebenfalls der Energieoptimierung des Geschirrspülprozesses. Da während des Zwischen- und/oder Klarspülens nur geringfügig Schmutz vom Geschirr in das Reinwasser gelangt, ist dieses am Ende des Geschirrspülprozess immer noch genügend sauber, um im nächsten Vor- und/oder Hauptwaschen zur Reinigung des Geschirrs wiederverwendet zu werden. Da das gebrauchte Reinwasser aber trotzdem einen gewissen Verschmutzungsgrad aufweist, kann es nicht im ersten Speichertank aufbewahrt werden, welcher für das aus der Umkehrosmosevorrichtung abgegebene Reinwasser vorgesehen ist. Aus diesem Grund sind ein erster und ein zweiter Speichertank vorgesehen.

Im Weiteren kann von der Umkehrosmosevorrichtung während des Zwischen- und/oder Klarspülens zusätzliches Reinwasser bereitgestellt werden. Dies hat den Vorteil, dass der erste Speichertank mit einem kleineren Speichervolumen ausgestaltet werden kann. Denn es muss nicht das gesamte während dem Zwischen- und/oder Klarspülen benötigte Reinwasser gespeichert werden.

In einer besonderen Ausführungsform wird das Reinwassers mittels der Umkehrosmosevorrichtung zu Beginn des Zwischen- und/oder Klarspülens bereitgestellt und unmittelbar in den Bottich eingeleitet. Auf die Speicherung des Reinwassers wird verzichtet. Das während des Zwischen- und/oder Klarspülens gebrauchte Reinwassers wird während und/oder am Ende des Zwischen- und/oder Klarspülens vom Bottich in den ersten Speichertank zugeführt und für den nächsten Waschgang wiederverwendet.

Vorteilhaft ist die Umkehrosmosevorrichtung innerhalb des Geschirrspülers eingebaut. Damit eignet sich der Geschirrspüler besonders gut zum Einbau in Küchen von Privathaushalten.

Anzumerken ist, dass der Umkehrosmosevorrichtung ein Chlorfilter und/oder ein Partikelfilter vorgeschaltet sein kann und/oder die Speichertanks eine Füllstandsmessung aufweisen können.

Weiter geschützt ist ein Geschirrspüler, welcher ausgestaltet ist, das soeben beschriebene Verfahren auszuführen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine erste Ausführungsform eines Geschirrspülers mit einer Umkehrosmosevorrichtung;
Fig. 2 eine zweite Ausführungsform eines Geschirrspülers mit einer Umkehrosmosevorrichtung;
Fig. 3 eine dritte Ausführungsform eines Geschirrspülers mit einer Umkehrosmosevorrichtung; und
Fig. 4 eine vierte Ausführungsform eines Geschirrspülers mit einer Umkehrosmosevorrichtung.

### Wege zur Ausführung der Erfindung

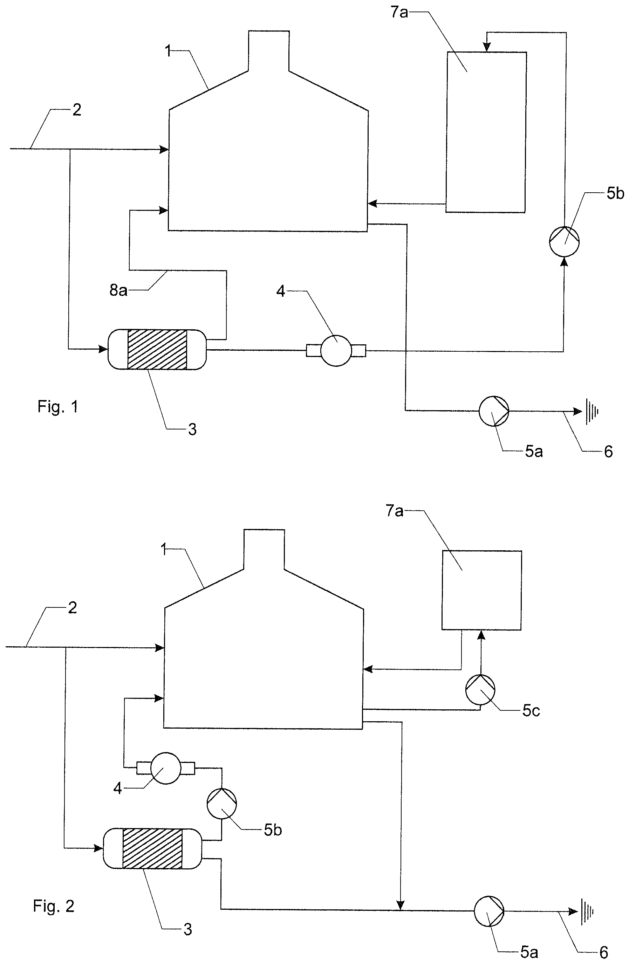

Die Fig. 1 bis 4 zeigen eine schematische Darstellung der erfindungswesentlichen Komponenten eines Geschirrspülers. Der Geschirrspüler umfasst einen Bottich 1 mit einem Sumpf. Der Sumpf dient zur Sammlung des Prozesswassers innerhalb des Bottichs 1, sodass während des Prozesses am Sumpf 1 angeordnete Absaugstutzen stets mit Prozesswasser bedeckt sind.

Weiter umfasst der Geschirrspüler eine Frischwasserzufuhr 2, welche am Leitungssystem eines Privathaushaltes angeschlossen werden kann. Das Frischwasser wird entweder direkt in den Bottich 1 oder in eine Umkehrosmose 3 zugeführt.

Die Umkehrosmosevorrichtung 3 dient der Reinigung des zugeführten Frischwassers durch Umkehrung des natürlichen Osmoseprozesses. Das Frischwasser wird einem Druck, beispielsweise von 3 bar oder 5 bar oder 8 bar, ausgesetzt und gegen eine Membran gedrückt, welche nur die Trägerflüssigkeit, d.h. vorliegend das Wasser, durchlässt und die gelösten Stoffe zurückhält. Dadurch wird eine erste Wassermenge, welche eine im Vergleich zum Frischwasser geringe Konzentration gelöster Stoffe aufweist, und eine zweite Wassermenge, welche eine im Vergleich zum Frischwasser höhere Konzentration gelöster Stoffe aufweist, bereitgestellt. Im Folgenden wird die erste Wassermenge mit der geringeren Konzentration Reinwasser und die zweite Wassermenge mit der höheren Konzentration Konzentrat genannt.

Auslassseitig zur Umkehrosmosevorrichtung ist ein Durchflussmessgerät 4 angeordnet, welches die Durchflussmenge des Reinwassers misst. Weiter umfasst der Geschirrspüler Pumpen 5, einen Abfluss 6 und zumindest einen ersten Speichertank 7.

Im Folgenden werden nun vier unterschiedliche Ausführungsformen von Geschirrspüler und die dazugehörigen Verfahren beschrieben. Um die einzelnen Ausführungsformen im Vergleich darzustellen, wird beispielhaft stets davon ausgegangen, dass das Geschirrspülverfahren ein Vorwaschen, ein Hauptwaschen, ein Zwischenspülen und ein Klarspülen umfasst. Im Weiteren ist beispielhaft der Druck in der Umkehrosmosevorrichtung so eingestellt, dass aus dem zugeführten Frischwasser stets 50% Reinwasser und 50% Konzentrat generiert wird. Dieses Verhältnis könnte natürlich auch anders sein.

Beim Vorwaschen wird der grobe Schmutz vom Geschirr entfernt. Beim Hauptwaschen erfolgt mit Hilfe von Waschmittel eine saubere Reinigung des Geschirrs. Beim Zwischenspülen findet ein erstes Spülen statt, in welchem die Rückstände des Waschmittels vom Geschirr entfernt werden. Mit dem Klarspülen wird zum Schluss das Geschirr auf seinen saubersten Stand gebracht. Nach dem Klarspülen erfolgt üblicherweise eine Trocknung des Geschirrs.

Für die Beschreibung der unterschiedlichen Ausführungsformen wird davon ausgegangen, dass das Vorwaschen 4 Liter Wasser, das Hauptwaschen 3.5 Liter Wasser, das Zwischenspülen 3 Liter Wasser und das Klarspülen 3.5 Liter Wasser verbrauchen.

Die in Fig. 1 dargestellte erste Ausführungsform zeigt einen Geschirrspüler, welcher einen ersten Speichertank 7a mit einem Speichervolumen von 6.5 Liter aufweist. Dieses Speichervolumen entspricht dem gesamten beim Zwischen- und Klarspülen benötigten Wasservolumen. Aufgrund seines grossen Volumens kann der erste Speichertank 7a auch in mehrere kleinere Speichertanks aufgeteilt sein, welche innerhalb des Geschirrspülers an unterschiedlichen Positionen angeordnet sind.

Während dem Vorwaschen und dem Hauptwaschen werden insgesamt 13 Liter Frischwasser der Umkehrosmosevorrichtung 3 zugeführt. 6.5 Liter Frischwasser verlassen die Umkehrosmosevorrichtung 3 als Reinwasser, strömen durch das Durchflussmessgerät 4 und werden anschliessend im ersten Speichertank 7a gespeichert. Die andere Hälfte des Frischwassers, d.h. ebenfalls 6.5 Liter, verlässt die Umkehrosmosevorrichtung als Konzentrat und gelangt über die Leitung 8a direkt in den Bottich 1. Das Konzentrat kann problemlos zum Waschen beim Vor- und Hauptwaschen verwendet werden.

Von dem beim Vor- und Hauptwaschen insgesamt benötigten 7.5 Liter Wasser werden somit insgesamt 6.5 Liter von der Umkehrosmosevorrichtung zugeführt. Ein zusätzlicher Liter wird direkt von der Frischwasserzufuhr 2 in den Bottich geleitet.

Sowohl für das Zwischenspülen als auch für das Klarspülen stehen im ersten Speichertank 7a insgesamt 6.5 Liter Reinwasser zur Verfügung, die vom ersten Speichertank 7a in den Bottich zugeführt werden.

Das Geschirrspülverfahren gemäss der ersten Ausführungsform benötigt somit insgesamt 14 Liter Wasser und im Vergleich zu den folgenden Ausführungsformen sparsam.

Die in Fig. 2 dargestellte zweite Ausführungsform zeigt einen Geschirrspüler mit einem ersten Speichertank 7a, welcher ein Speichervolumen von 2.8 Liter umfasst. Der erste Speichertank 7a der zweiten Ausführungsform ist im Vergleich zum ersten Speichertank 7a der ersten Ausführungsform kleiner ausgestaltet, sodass die räumliche Unterbringung innerhalb des Geschirrspülers einiges einfacher ist.

Der erste Speichertank 7a dient in der zweiten Ausführungsform nicht der Speicherung von Reinwasser, sondern dem Speichern von gebrauchten Klarspülwasser. D.h. am Ende des Geschirrspülprozesses bzw. am Ende des Klarspülens werden insgesamt 2.8 Liter gebrauchtes Prozesswasser aus dem Bottich mittels der Pumpe 5c in den ersten Speichertank 7a geführt. Dieses gebrauchte Prozesswasser wird gespeichert und im nächsten Geschirrspülprozess wiederverwendet.

Zu Beginn eines Geschirrspülprozesses werden somit 2.8 Liter gebrauchtes Klarspülwasser vom ersten Speichertank 7a in den Bottich 1 geführt. Die restlichen 1.2 Liter für das Vorwaschen werden mit Frischwasser ergänzt. Für das Hauptwaschen werden 3.5 Liter Frischwasser direkt in den Bottich geführt.

Für das Zwischen- und Klarspülen werden insgesamt 13 Liter Frischwasser der Umkehrosmosevorrichtung 3 zugeführt. 6.5 Liter Frischwasser verlassen die Umkehrosmosevorrichtung 3 als Reinwasser, strömen durch das Durchflussmessgerät 4 und anschliessend direkt in den Bottich 1. Die andere Hälfte des Frischwassers, d.h. ebenfalls 6.5 Liter, verlässt die Umkehrosmosevorrichtung als Konzentrat und gelangt in den Abfluss 6. Im Vergleich zur ersten Ausführungsform wird bei der zweiten Ausführungsform das Konzentrat nicht als Waschwasser verwendet.

Das Geschirrspülverfahren gemäss der zweiten Ausführungsform benötigt insgesamt 17.7 Liter Wasser und ist dadurch weniger sparsam als das Geschirrspülverfahren gemäss der ersten Ausführungsform. Ein Vorteil besteht allerdings darin, dass der erste Speichertank 7a mit einem kleineren Volumen ausgestaltet werden kann und auch kein zweiter Speichertank notwendig ist.

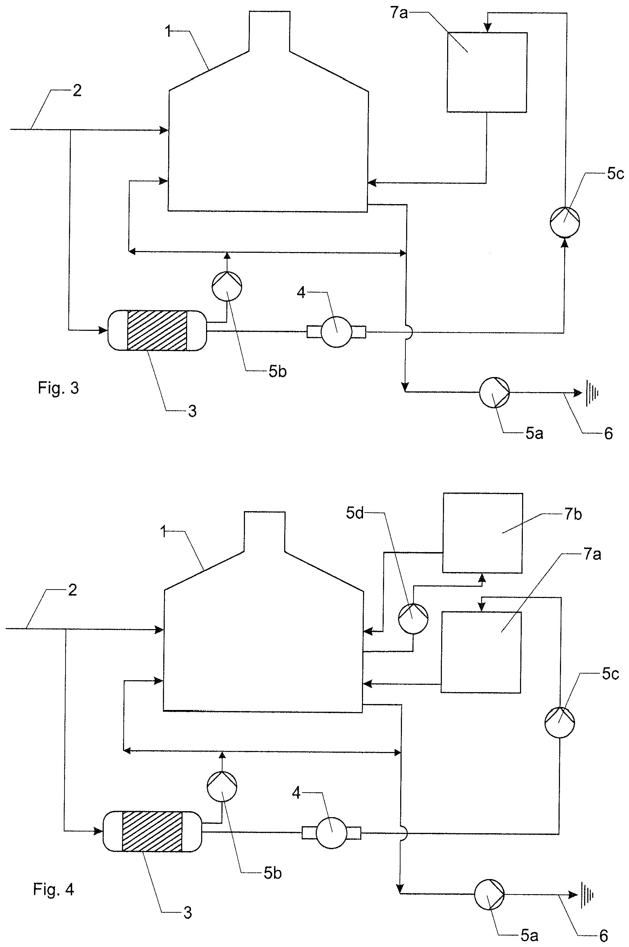

Die in Fig. 3 dargestellte dritte Ausführungsform zeigt ebenfalls einen Geschirrspüler mit einem ersten Speichertank 7a, welcher ein Speichervolumen von 2.8 Liter aufweist. Der erste Speichertank 7a dient in der dritten Ausführungsform der Speicherung von Reinwasser.

Zu Beginn des Geschirrspülprozess werden insgesamt 5.6 Liter Frischwasser der Umkehrosmosevorrichtung 3 zugeführt. 2.8 Liter Frischwasser verlassen die Umkehrosmosevorrichtung als Reinwasser, strömen durch das Durchflussmessgerät 4 und anschliessend in den ersten Speichertank 7a. Die andere Hälfte des Frischwassers, d.h. ebenfalls 2.8 Liter, verlässt die Umkehrosmosevorrichtung als Konzentrat und gelangt direkt in den Bottich 1. Weitere 1.2 Liter Frischwasser werden von der Frischwasserzufuhr 2 direkt in den Bottich geführt. Während des Hauptwaschens werden 3.5 Liter Frischwasser von der Frischwasserzufuhr 2 ebenfalls direkt in den Bottich 1 geführt.

Zu Beginn des Zwischenspülens werden die gespeicherten 2.8 Liter Reinwasser vom ersten Speichertank 7a in den Bottich 1 geführt. Weitere 0.4 Liter Frischwasser werden in die Umkehrosmosevorrichtung 4 geführt, wovon 0.2 Liter Reinwasser in den Bottich 1 und 0.2 Liter Konzentrat in den Abfluss 6 gelangen.

Während des Klarspülens gelangen 7 Liter Frischwasser zur Umkehrosmosevorrichtung 3, wovon 3.5 Liter Reinwasser in den Bottich 1 und 3.5 Liter Konzentrat direkt in den Abfluss gelangen.

Das Geschirrspülverfahren gemäss der dritten Ausführungsform benötigt somit insgesamt 17.7 Liter Wasser und benötigt damit gleich viel Wasser wie der Geschirrspülprozess der zweiten Ausführungsform.

Die in Fig. 4 dargestellte vierte Ausführungsform zeigt einen Geschirrspüler, welcher einen ersten Speichertank 7a und einen zweiten Speichertank 7b aufweist. Der erste speichertank 7a dient der Speicherung von Reinwasser und der zweite Speichertank 7b dient der Speicherung von gebrauchtem Klarspülwasser analog zur zweiten Ausführungsform. Der erste Speichertank 7a weist ein Speichervolumen von 3.5 Liter und der zweite Speichertank 7b ein Speichervolumen von 2.8 Liter auf.

Beim Vorwaschen werden 2.8 Liter gebrauchtes Klarspülwasser vom vorherigen Waschgang in den Bottich 1 zugeführt. Weitere 2.4 Liter Frischwasser strömen in die Umkehrosmosevorrichtung 3, von welcher 1.2 Liter Konzentrat in den Bottich 1 und 1.2 Liter Reinwasser in den ersten Speichertank 7a gelangen. Während dem Hauptwaschen werden 4.6 Liter Frischwasser der Umkehrosmosevorrichtung 3 zugeführt, wovon 2.3 Liter Konzentrat in den Bottich 1 und 2.3 Liter Reinwasser in den ersten Speichertank 7a gelangen. Weitere 1.2 Liter Frischwasser gelangen von der Frischwasserzufuhr direkt in den Bottich 1.

Während dem Zwischenspülen werden 3 Liter Reinwasser aus dem ersten Speichertank 7a dem Bottich zugeführt. Während des Klarspülens gelangen weiteren 0.5 Liter Reinwasser aus dem ersten Speichertank 7a in den Bottich 1 und 6 Liter Frischwasser werden der Umkehrosmosevorrichtung 3 zugeführt, wovon 3 Liter Reinwasser in den Bottich 1 und 3 Liter Wasser in den Abfluss 6 gelangen.

Das Geschirrspülverfahren gemäss der vierten Ausführungsform benötigt somit insgesamt 14.2 Liter Wasser und ist ähnlich sparsam wie der Geschirrspülprozess der ersten Ausführungsform.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Reinigung von Geschirr in einem Geschirrspüler, insbesondere einem Haushaltsgeschirrspüler, umfassend
- einen Bottich (1) zur Aufnahme des Geschirrs, und
- eine Umkehrosmosevorrichtung (3) zur Bereitstellung von Reinwasser und Konzentrat,
wobei das Verfahren die folgenden Verfahrensschritte umfasst:
- Vor- und/oder Hauptwaschen des Geschirrs;
- Bereitstellen von Reinwasser und Konzentrat mittels der Umkehrosmosevorrichtung (3);
- Zwischen- und/oder Klarspülen des Geschirrs mittels des Reinwassers.

2. Verfahren nach Anspruch 1, wobei der Geschirrspüler einen ersten Speichertank (7a) umfasst.

3. Verfahren nach Anspruch 2, umfassend die folgenden Verfahrensschritte:
- Bereitstellen des Reinwassers mittels der Umkehrosmosevorrichtung (3) vor und/oder während des Vor- und/oder des Hauptwaschens und Speichern des Reinwassers im ersten Speichertank (7a);
- Zuführen des Reinwassers aus dem ersten Speichertank (7a) in den Bottich (1) während des Zwischen- und/oder des Klarspülens.

4. Verfahren nach Anspruch 3, wobei der erste Speichertank (7a) ein Speichervolumen aufweist, welches mindestens dem benötigten Volumen des Reinwassers während des Zwischen- und/oder des Klarspülens entspricht.

5. Verfahren nach Anspruch 3 oder 4, umfassend den folgenden Verfahrensschritt:
- Zuführen des Konzentrates in den Bottich (1) unmittelbar während der Bereitstellung mittels der Umkehrosmosevorrichtung (3), und
- insbesondere Zuführen von Frischwasser in den Bottich (1) während des Vor- und/oder des Hauptwaschens.

6. Verfahren nach einem der Ansprüche 2 bis 5, wobei der Geschirrspüler einen zweiten Speichertank (7b) umfasst und das Verfahren den folgenden Verfahrensschritt umfasst:
- Zuführen von gebrauchtem Reinwasser während und/oder am Ende des Klarspülens vom Bottich (1) in den zweiten Speichertank (7b) und Wiederverwenden des gebrauchten Reinwassers für einen nächsten Waschgang.

7. Verfahren nach einem der Ansprüche 2 bis 6, umfassend den folgenden Verfahrensschritt:
- Bereitstellen von Reinwasser mittels der Umkehrosmosevorrichtung (3) während des Zwischen und/oder des Klarspülens,
insbesondere wobei das Reinwasser direkt in den Bottich (1) oder in den ersten Speichertank (7a) zur Speicherung geführt wird.

8. Verfahren nach Anspruch 2, umfassend die folgenden Verfahrensschritte:
- Bereitstellen des Reinwassers mittels der Umkehrosmosevorrichtung (3) zu Beginn des Zwischen- und/oder Klarspülens und unmittelbare Einleitung des Reinwassers in den Bottich (1);
- Zuführen von gebrauchtem Reinwasser während und/oder am Ende des Zwischen und/oder Klarspülens vom Bottich (1) in den ersten Speichertank (7a) und Wiederverwenden des gebrauchten Reinwassers für einen nächsten Waschgang.

9. Verfahren nach einem der vorangehenden Ansprüche, wobei die Umkehrosmosevorrichtung (3) innerhalb des Geschirrspülers eingebaut ist.

10. Geschirrspüler umfassend
- einen Bottich (1) zur Aufnahme des Geschirrs,
- eine Umkehrosmosevorrichtung (3) zur Bereitstellung von Reinwasser und Konzentrat, und
- eine Steuerung ausgestaltet zur Durchführung des Verfahrens nach einem der vorangehenden Ansprüche.
